# EUROPEAN PATENT SPECIFICATION

(11) **EP 0 460 744 B1**
(45) Date of publication and mention of the grant of the patent: **23.07.1997**
(21) Application number: 91201324.0
(22) Date of filing: 31.05.1991
(51) Int. Cl.: C04B 24/26

(54) **Cement based mortar compositions having elastomeric properties, and method of manufacture**
Mörtelzusammensetzungen auf Zementbasis mit elastomeren Eigenschaften und Verfahren zur Herstellung
Compositions de mortier à base de ciment ayant des propriétés élastomères et procédé de fabrication

(30) Priority: 06.06.1990 US 534690; 09.10.1990 US 594916
(43) Date of publication of application: 11.12.1991
(73) Proprietor: C-CURE CHEMICAL CO. INC., Houston, Texas 77292-0906 (US)
(72) Inventor: Johansen, Charles J. Jr., Katy, Texas 77450 (US); Hollas, Ernest D., Kingwood, Texas 77339 (US); Vecchio, Robert L., Spring, Texas 77379 (US)
(74) Representative: Fusina, Gerolamo

(56) References cited:
- EP-A- 0 256 144
- EP-A- 0 281 476
- WO-A-82/02195
- FR-A- 1 264 052
- FR-A- 1 527 342
- FR-A- 2 057 918
- GB-A- 1 388 350
- US-A- 3 538 036
- CHEMICAL ABSTRACTS, vol. 95, no. 14, October 5, 1981, Columbus, Ohio, US; abstract no. 120022S, V.CICHAN ET AL 'Adhesive for building industry '

## Description

The present invention relates to Portland cement based compositions having elastomeric properties. More particularly, the invention relates to acrylic polymer modified Portland cement based compositions having enhanced elastomeric properties and increased bond strength. Most particularly, the present invention relates to Portland cement based compositions which are particularly suitable for setting and grouting tile, for crack suppression membranes, for stuccos, for floor leveling, and for patching mortars. The invention also relates to methods of preparing these mortars.

The grouting and setting compositions generally employed by the tile industry for tiles usually comprise a Portland cement base and various chemical adhesive materials. These materials enjoy a wide acceptance as a mortar for grouting and setting because of their low cost and ease of application. The compositions are also relatively permanent, non-toxic and inert.

In many applications of mortar compositions, it is essential for the cured composition to possess good flexibility and elastomeric qualities. Flexibility is defined as the ability to bend without breaking. Elasticity is the property by virtue of which a body resists and recovers from deformation produced by force. Unfortunately, conventional hydraulic cements do not inherently have elastomeric properties, and heretofore the trade has not produced a Portland cement based mortar having elastomeric properties. This has resulted in a substantial decline in the use of Portland cement based mortar for setting tile.

Presently, applications that require adhesion with elasticity must rely on compounds such as polyurethanes or polysulphides. Unfortunately, such compounds have several disadvantages including the fact that they are comprised of toxic ingredients, require toxic solvents for clean-up, and are expensive. Such drawbacks, in some instances, have resulted in a decline in the use of tile as a covering for substrates which are subject to vibration and deflection.

Other shortcomings of popular setting and grouting materials arise because the compositions are usually prepared at the job site just prior to use. Therefore, the mortar and grout ingredients are difficult to prepare, and are subject to a variety of measuring and mixing techniques which result in a lack of uniformity of the cured grout.

Most attempts to overcome such deficiencies of the setting and grouting compositions have thus far concentrated on improving the flexibility of the grout. For instance, the flexibility of Portland cement can be effectuated by adding to Portland cement a liquid emulsion of polyvinil acetate. Such a procedure is reported in Geist and Mellor, Industrial and Engineering Chemistry, Vol. 45, page 759, November 4, 1953. Although liquid emulsions of polyvinyl acetate are useful for improving the flexibility characteristics of Portland cement, a considerable number of drawbacks accompany their use. Among the disadvantages accompanying use of the liquid emulsions are that (a) the liquid emulsion is unstable below the freezing point of water, and thus requires special precautions to be taken during storage and transportation in cold weather, and (b) very careful proportioning of the liquid emulsion and the hydraulic cement is required and personnel in the field are frequently unable to meet this requirement. Mixing errors, where such emulsions are used, are the rule rather than the exception.

US-A- 2 990 382 illustrates the efforts made to overcome the disadvantages of polyvinyl acetate modified Portland cement. In Wagner et al., hydraulic cement, methyl cellulose, and water insoluble, reemulsifiable polyvinyl acetate are mixed. The resulting toxic ingredients, require toxic solvents for clean-up, and are expensive. This has resulted in a substantial decline in the use of Portland cement based mortar for setting tile and, in some instances, a decline in the use of tile as a covering for substrates which are subject to vibration and deflection.

Other shortcomings of popular setting and grouting materials arise because the compositions are usually prepared at the job site just prior to use. Therefore, the mortar and grout ingredients are difficult to prepare, and are subject to a variety of measuring and mixing techniques which result in a lack of uniformity of the cured grout.

Most attempts to overcome such deficiencies of the setting and grouting compositions have thus far concentrated on improving the flexibility of the grout. For instance, the flexibility of Portland cement can be effectuated by adding to Portland cement a liquid emulsion of polyvinyl acetate. Such a procedure is reported in Geist and Mellor, Industrial and Engineering Chemistry, Vol. 45, page 759, November 4, 1953. Although liquid emulsions of polyvinyl acetate are useful for improving the flexibility characteristics of Portland cement, a considerable number of drawbacks accompany their use. Among the disadvantages accompanying use of the liquid emulsions are that (a) the liquid emulsion is unstable below the freezing point of water, and thus requires special precautions to be taken during storage and transportation in cold weather, and (b) very careful proportioning of the liquid emulsion and the hydraulic cement is required and personnel in the field are frequently unable to meet this requirement. Mixing errors, where such emulsions are used, are the rule rather than the exception.

US-A- 2 990 382 illustrates the efforts made to overcome the disadvantages of polyvinyl acetate modified Portland cement. In Wagner et al., hydraulic cement, methyl cellulose, and water insoluble, reemulsifiable polyvinyl acetate are mixed. The resulting composition avoids the above noted freezing and proportioning problems, but does not provide elastomeric qualities.

Specialized filler/polymer dispersion systems are available for caulking, grouting and the like, but such compositions do not possess sufficient properties to render them useful for substrates subject to vibration or deflection. For instance, caulking compositions which are employed as tub caulk, and expansion and control joint fillers, have extremely slow hardening properties and usually retain a putty-like consistency over periods as long as several years. However, when these compositions dry, they are brittle and will readily crack on shrinkage or movement.

A more complicated scheme to achieve resiliency with a ceramic tile flooring is described in US-A- 4 567 704. Therein, resiliency is achieved with a composite floor covering comprising a rubbery backing strip or layer in intimate contact with the floor, ceramic tiles placed over the backing layer, and flexible grouting between the tiles.

Other commercial attempts to increase flexibility of cement based grouting compositions have led to compositions formulated in which such materials as latex, epoxy, polyurethane, and furan type resins have been employed as additives. Although such modified compositions often show increases in flexibility, they do not exhibit elastomeric qualities.

US-A- 3 917 771 discloses a composition for filling and sealing. According to this patent, the seal is achieved by the use of a two component composition, with one component comprising an aqueous latex of a synthetic organic polymer and the other component comprising a mixture of Portland cement and bentonite. According to a preferred embodiment, the first component contains an equal amount of sand and water-based acrylic latex, and the second component contains 1 to 5 parts by volume of bentonite, in proportion to 1 to 5 parts by volume Portland cement. The two components are separately packaged in an airtight condition, and then the first component is mixed with a minor amount of the second component, for example, 40 to 60 parts by volume of the first component with 1 part by volume of the second component.

It is also known in the art to use acrylic polymer dispersions in cement based compositions to enhance flexibility. However, such compositions found in the art do not exhibit elastomeric properties. For instance, commercial mortars produced by PCI Polychemie GmbH, such as the mortar produced by mixing "PCI-LASTOFLEX"® and "PCI-NON-SAG"®, and commercial mortars produced by Maipei, such as "KERALASTIC"®, exhibit flexible characteristics without elastomeric characteristic. Furthermore, such commercial mortars do not possess superior bond strengths. Similarly, stucco manufacturers often include acrylic polymer dispersions in their compositions to improve flexural strength, but such compounds do not possess elastomeric properties.

Some attempts have been made with waterproofing compositions to add some elastomeric properties by utilizing acrylic polymers. For instance, JP -A- 63 /055 143 discloses a waterproofing agent comprising a mixture of cement, aggregate and synthetic polymer emulsion, and water. The polymer emulsion is prepared by emulsion - polymerizing a monomer mixture comprising 55 - 90 weight percent of 4C - 8C alkyl ester of acrylic acid, 5 - 40 weight percent of acrylonitrile and/or styrene, 1 - 10 weight percent of (meth)acrylic acid and 1 - 10 weight percent of one or more of 2 - hydroxyethyl(meth)acrylate, 2-hydroxypropyl(meth)acrylate and (meth)acrylamide in the presence of nonionic emulsifiers.

JP-A- 55 / 007 309 discloses a protective waterproofing layer being formed on the surface of a building by forming initially a flexible waterproofing film having elongation of greater than 100 percent, and subsequently coating thereon a composition comprising 1 part by weight of resin emulsion containing greater than 50 percent of acrylic alkyl ester, with C2 - C10 alkyl radical, 1 - 10 parts by weight of cement, and 1 - 100 parts by weight of aggregate. JP-A- 80/001 308 and JP-A-48/083 625 disclose a waterproofing mortar which typically contains 35 parts by weight asphalt emulsion, 65 parts by weight acrylic resin emulsion, 20 parts by weight sand, and 30 parts by weight cement treated with kerosene. Similarly, HU-A- 50 085 discloses an elastic waterproof mixture comprising 45-60 percent aqueous dispersion of 1C - 12C acrylic acid - alkyl ester polymer, 12 - 30 percent cement, 25 - 50 percent powder, and up to 10 additives.

Moreover according to CA, vol. 95, no. 14, 1981, no. 1200225 an adhesive for bonding of tiles is known, which adhesive comprises 50 - 90 % of cement, 5 - 25 % of a styrene-acrylate copolymer and acidic casein.

These above cited waterproofing compositions, however, are not suitable for many of the setting, grouting, crack suppression and/or adhesion functions required of cementitious mortars. Furthermore, they do not possess sufficient elastomeric and/or bond strenght characteristics to be used on substrates which are subject to vibration and deflection.

The present invention represents the culmination of a long series of investigations directed to overcoming the inherent deficiencies of conventional mortar compositions, and providing Portland cement based mortar having elastic properties.

Accordingly, the primary objective of the present invention is to provide a Portland cement based setting and grouting composition with elastomeric properties, for the installation of tile on substrates subject to vibration and deflection.

Another object of the present invention is to provide an improved Portland cement based mortar composition which possesses the advantages of the conventional Portland cement based setting and grouting composition without any of the inherent disadvantages of such compositions.

It is another object of the present invention to provide a Portland cement based composition with elastomeric properties and with superior bond strenght. Yet another object of this invention is to provide a cement based crack suppression membrane with elastomeric properties, for tile installation.

It is yet another object of this invention to provide a cement based adhesive. Example of materials or surfaces for which this invention can be used include ceramic tile, marble, slate, stone, granite, cinder block, brick, concrete block, gypsum wallboard, plastic laminates, glass block, vinyl flooring, plywood, glass mesh mortar units, and the like.

It is also an object of the present invention to provide a stucco that will exhibit elastomeric qualities under stress without showing cracks through the surface, and also, if the substrate cracks below the stucco, to absorb the stress and not show the cracks.

In still another object of the present invention, a cement based elastomeric mortar and grouting composition is provided in a two part preconstituted form , to ease preparation of the elastomeric mortar, and to improve the uniformity of the cured composition.

Additional objects and advantages of the invention will be set forth in the description which follows, and in part will be obvious from the description, or may be realized by the practice of the invention, the objects and advantages being realized and attained by means of the methods, processes, instrumentalities and combinations particularly pointed out in the appended claims.

Accordingly, a cement based mortar and grout is provided having elastomeric properties measured by way of an elongation of greater than 100 % when cured, which mortar consists essentially of cement, inert filler, acrylic polymer dispersion, consisting essentially of an aqueous, plasticizer-free, anionic copolymer dispersion of an acrylic ester and styrene and water, whereby the cement comprises 5 to 50 percent of the total weight of the mortar, the inert filler comprises 10 to 60 percent of the total weight of the mortar, the acrylic polymer solids comprise 11 to 50 percent of the total weight of the mortar, and the water (including water for polymer dispersion) comprises 14 to 40 percent of the total weight of the mortar. In a most preferred embodiment, cement comprises 20 to 30 percent of the total weight of the mortar, the inert filler comprises 25 to 35 percent of the total weight of the mortar, the acrylic polymer solids comprise 15 to 25 percent of the total weight of the mortar, and the water (including water for polymer dispersion) comprises 15 to 25 percent of the total weight of the mortar. In an especially preferred embodiment, the mortar, when cured, exhibits a bond strenght to quarry tile of over24,15 bar (350 psi).

To achieve the foregoing objects and in accordance with its purpose, as embodied and broadly described, the present invention relates to an improved mortar and grout composition comprising cement, inert filler, water, and an acrylic polymer dispersion, wherein said acrylic polymer solids comprise 11 to 50 percent of the total weight of the mortar.

The cement based compositions having elastomeric properties are prepared by mixing a powder and a liquid admix, wherein said powder comprises cement and filler, and wherein said liquid admix comprises the acrylic polymer dispersion and water, and wherein said acrylic polymer solids comprise 11 to 50 percent of the total weight of the mortar.

The present invention also provides a novel process for preparing an elastomeric grouting composition, relating to mixing separately packaged components to produce a Portland cement based composition having elastomeric properties.

Therefore, the present invention provides a preconstituted mortar and grout composition for the installation of ceramic tile, marble, stone, and the like, which comprises the combination of acrylic polymer dispersion, water, cement, and inert filler.

In describing the hydraulic cement used in accordance with this invention, conventional Portland cement will be referred to hereinafter as an illustrative example to simplify the description of the invention. It should be realized, however, that the principles of this invention are applicable to all hydraulic cements such as, for example, calcium aluminate cements, blast-furnace slag cement, and the like. Specific examples of typical hydraulic cements useful in accordance with this invention are as follow:

Portland cement (American Society For Testing and Materials Designation C150-55) is the produce obtained by pulverizing clinker consisting essentially of hydraulic calcium silicates, to which no additives have been made subsequent to calcination other than water and/or calcium sulfate, except that additions not to exceed 1,0 percent of other materials may be interground with the clinker at the option of the manufacturer, provided such materials in the amount indicated have been shown to be not harmful by tests carried out or reviewed by Committee C-1 on Cement.

Portland blast-furnace slag cement (American Society For Testing and Materials Designation C205-53T) is the non-metallic product consisting essentially of silicate and alumina-silicates of calcium which is developed simultaneously with iron in a blast-furnace and is produced by rapidly chilling or quenching the molten material in water, steam or air.

Portland-pozzolan cement (American Society For Testing and Materials Designation C340-55T) is an intimately interground mixture of Portland cement clinker and pozzolan, or an intimate and uniform blend of Portland cement and fine pozzolan. The pozzolan consituent shall not be less than 15% by weight and shall not exceed 50 percent, by weight, of the Portland - pozzolan cement.

Aluminous cement is a cement containing a higher percentage of alumina than the Portlands, manufactured from clinker formed from a hydrated alumina such as bauxite, and limestone.

The filler may comprise aggregate filler, fine filler, or a combination of aggregate and fine fillers. The inert filler aggregate may be silica sand, crushed limestone, perlite, volcanic aggregate, or other clean inert material. The inert filler aggregate component of the compositione may comprise one, or a combination of clean inert materials. The ultimate criteria of the component being that such component be graded with not more than about 10 percent passing a 105 µm sieve opening (140 sieve) and none retained on a 3,36 mm sieve opening (number 6 sieve), as well as having an AFS Grain Fineness Number (American Foundry Society) of less than 100 but greater than 30.

The fine filler material on the other hand should have an average particle size which is less than 105 µm sieve opening (140 mesh), and may include pigments, inert materials, such as limestone, alumina trihydrate, ground quartz, volcanic ash, certain fine sands, talc, mica, clays and the like.

The acrylic polymer dispersion employed in the present invention is an aqueous plasticizer-free, anionic copolymer dispersion of an acrylic ester and styrene. Especially preferred is "ACRONAL S-400"®; produced by BASF.

Additional additives which aid in the coalescence of the composition and thereby yield cured products exhibiting improved stain resistance and toughness, as well as water resistance, may be incorporated. Illustrative of such additives are butoxy-ethyl acetate, ethoxyethyl acetate, butoxy ethoxyethyl acetate, toluene, xylene, hydrocarbon resins, mineral spirits, and the like.

Also, additives which control thixotrophy and viscosity characteristics may be incorporated in the composition. Illustrative of such additives are methyl cellulose, hydroxyethyl cellulose, carboxymethyl hydroxy ethyl cellulose, animal glues, various starches, alginates polyvinyl alcohol and protein among others. A preferred additive is "METHOCEL-K-100"® methyl cellulose produced by Dow Chemical Company. Especially preferred is "METHOCEL 609 TAG"® hydroxypropyl methyl-cellulose produced by Dow Chemical Company. Crosslinking agents for these additives may also be incorporated.

Illustrative of coloring materials which may be incorporated in the composition are titanium dioxide, iron oxides, zinc oxides, carbon black, alumina powder, and the like.

Illustrative of preservatives which may be incorporated in the composition are "COSAN N 101"® produced by CasChem, "DOWACEL 75"® produced by Dow Chemical Company, and "NUOSEPT 95 "® produced by Huls America Company. Especially preferred is "TROY 174 "® preservative produced by Troy Chemical Company.

Antifoam agents may also be included in the composition. Examples of such agents may be "ANTIFOAM B "® produced by Dow Corning, "GE 75 "® produced by General Electric, or "SAG 10 "® produced by Union Carbide. Especially preferred is "DOW CORNING 1520 "® defoamer. The composition may also include plasticizers. Illustrative of such plasticizers are chlorinated paraffin, asphalt emulsion phthalates or phosphates.

In addition to the acrylic polymer dispersion, other polymer dispersions may be included. Most anionic and nonanionic dispersions may be included, such as neoprene rubber, styrene butadiene rubber, or vinyl acrylic.

If so desired, the compositions of this invention may contain other miscellaneous additives conventionally used in mortar compositions. Thus, ethylene glycol, calcium chloride, vermiculite, calcium formate, and other similar materials may also be advantageously used for such purposes as freeze thaw stability, accelerating set, preventing shrinkage, preventing sagging on vertical surfaces, producing light-weight compositions, economy, and the like.

The following examples are provided for illustrative purposes and may include particular features of the invention. Unless otherwise indicated, the percentages or parts given are by weight.

### EXAMPLE 1

### PREPARATION OF GROUTING COMPOSITION

An elastomeric grouting composition was prepared by mixing a powder and a liquid admix.

The powder component of the elastomeric grouting composition was prepared comprising the following ingredients:

| | Percent by Weight |
|---|---|
| Portland Cement | 43,50 |
| Silica Sand (average particle size 250 µm (60 mesh) Hydroxypropyl Methylcellulose | 54,00 |
| ("METHOCEL 609 TAG")® | 0,70 |
| Calcium Formate | 0,16 |
| Calcium Carbonate | 1,64 |

The liquid admix component of the elastomeric grouting composition was prepared comprising the following ingredients:

| | Percent by Weight |
|---|---|
| Aqueous, plasticizer- free, anionic copolymer dispersion of an acrylic ester and styrene ("ACRONAL S-400")® | 96,33 |
| Defoamer ("DOW CORNING 1520")® | 0,40 |
| Preservative ("TROY 174")® | 0,02 |
| Water | 3,25 |

The powder and liquid admix components of elastomeric grouting composition were then mixed at a ratio of 0,7 l of admix liquid per kg (2 gallons of admix liquid to 25 lbs) of powder.

First, the liquid was added to a clean bucket. Powder was then added while slowly mixing at a speed of less than 500 RPM.

Thus, a Portland cement based composition was formed having approximately 23 percent by weight polymer solids, an elasticity of 190 percent, and a bond strenght of 27,6 bar (400 psi).

### EXAMPLE 2

### CRACK TREATMENT

To test the isolation of cracks less than 3,175 mm (1/8 inch), cracks were filled by compressing the elastomeric grouting composition produced in Example 1 into the cracks with the flat side of a trowel during the normal installation of tiles. The composition was then keyed into the substrate using the flat side of a trowel. Next, additional composition was applied to a depth sufficient to be notched with a suitable trowel giving 100 percent contact to the back of the tiles and a subsequent depth of 2,38 mm to 4,76 mm (3/32 to 3/16th inch).

The composition was then allowed to cure for 24 hours, and then a polymer modified dry set mortar was applied over the composition as a tile bonding mortar.

After the composition cured, the substrate was subjected to vibration and deflection. The grouting composition exhibited elastomeric properties, and the cracks remained isolated and did not appear on the surface.

### EXAMPLE 3

### CRACK TREATMENT

As an alternative to the crack treatment of Example 2, after the composition produced in Example 1 was compressed into the cracks, the composition was keyed over the cracks and into the adjacent substrate with a flat trowel. Next, with a 4,76 mm x 4,76 mm (3/16 x 3/16 inch) "V" notched trowel, the composition was combed, flattened, and then smoothed with a flat side of a trowel.

The composition was allowed to cure for 24 hours, and then a polymer modified dry set mortar was applied over the composition as a tile bonding mortar.

After the composition cured, the substrate was subjected to vibration and deflection. The grouting composition exhibited elastomeric properties, and the cracks remained isolated and did not appear on the surface.

### EXAMPLE 4

### SETTING TILE

The composition of Example 1 above was also used as an adhesive to set ceramic tile. A standard trowel and tile setting application technique was utilized with the composition of Example 1. A single coat of the composition was trowled directly over bare substrate.

The tile was then set into the composition following standard procedure.

After the composition cured the substrate was subjected to vibration and deflection. The grouting composition exhibited elastomeric properties, and the ceramic tile remained set with no cracks appearing.

### COMPARATIVE EXAMPLE 5

To compare the properties of the applicants' invention to conventional flexible mortar, three separate tests were performed.

Firstly, the elongation of the mortars was determined pursuant to the procedures established by the American Society For Testing and Materials Designation in ASTM D 751-89. Secondly, the break strength of the mortars was determined pursuant to the procedures established by the American Society For Testing and Materials Designation in ASTM D 751-89. Finally, the bond strength to quarry tile was determined pursuant to the procedures established by the American National Standard Specifications For The Installation of Ceramic Tile in ANSI A-118.4 - 1985.

The comparison was conducted between the applicants' invention and two conventional flexible mortars. The applicants' mortar was prepared as in Example 1 described above. A formulation of PCI Polychemie GmbH's "PCI-LASTOFLEX"® was combined with "PCI-NON-SAG"® to produce a mortar pursuant to the instructions included with these products. A formulation of Mapei's "KERALASTIC"® mortar was also prepared pursuant to the instructions included with the product. The properties of the applicants' mortar compared to the properties of the other mortars as shown below in Table 1:

**TABLE 1**

| **PROPERTY** | **APPLICANTS' INVENTION** | **"PCI-LASTOFLEX"® +"PCI-NON-SAG"®** | **"MAPEI KERALASTIC"®** |
|---|---|---|---|
| Elongation | 190% | 15% | 10% |
| Break Strength | 8,42 bar (122 psi) | 8,97 bar (130 psi) | 3,80 bar (55 psi) |
| Bond Strength to quarry tile | 27,6 bar (400 psi) | 20,7 bar (300 psi) | 17,25 bar (250 psi) |

### EXAMPLE 6

### PREPARATION OF STUCCO

An elastomeric stucco was prepared by mixing a powder and a liquid admix.

The powder component of the elastomeric stucco was prepared comprising the following ingredients:

| | Percent by Weight |
|---|---|
| White Portland Cement | 20,00 |
| Finishing Lime | 5,00 |
| Silica Sand (average particle size 841 µm (20 mesh) | 74,90 |
| Methyl Cellulose ("METHOCEL-K-100")® | 0,10 |

The liquid admix component of the elastomeric stucco was prepared as described in Example 1.

The powder and liquid admix components of elastomeric stucco were then mixed at a ratio of 2,22 kg of powder to 1 kg (100 lbs. of powder to 45 lbs) of liquid admix.

First, the liquid admix was added to a clean bucket. Powder was then added while slowly mixing at a speed of less than 500 RPM.

Thus, a Portland cement based stucco was formed having approximately 17 percent by weight polymer solids, and an elasticity of 140 percent.

### EXAMPLE 7

### PREPARATION OF STUCCO

An elastomeric stucco was prepared by mixing a powder and a liquid admix.

The powder component of the elastomeric grouting composition was prepared comprising the following ingredients:

| | Percent by Weight |
|---|---|
| Portland Cement | 15,00 |
| Finishing Lime | 10,00 |
| Silica Sand (Average particle size 841 µm (20 mesh) | 75,00 |

The liquid admix component of the elastomeric stucco was prepared as described in Example 1.

The powder and liquid admix components of elastomeric stucco were then mixed at a ratio of 1,81 kg of powder to 1 kg (100 lbs of powder to 55 lbs) of liquid admix. First, the liquid was added to a clean bucket. Powder was then added while slowly mixing at a speed of less than 500 RPM.

Thus, a Portland cement based stucco was formed having approximately 28,5 percent by weight polymer solids, and an elasticity of 110 percent.

As used herein, the term "mortar" means a cementitious composition that can be used to set tile such as ceramic tile, to grout the tile by insertion in the tile openings between the set tile, as a stucco, for crack suppression membranes, as a floor leveler, or for patching mortars.

As used herein, the term "elastomeric" means capable of recovering from deformation resulting from an elongation of greater than 30 percent. For example, "ULTRASET®" as manufactured by the Bostik Company, is a non-Portland cement based adhesive that is capable of recovering from deformation resulting from an elongation of greater than 300 percent.

All patents and test methods mentioned have been indicated above to illustrate the prior art.

## Claims

1. A cement based mortar having elastomeric properties, consisting essentially of:
cement;
inert filler;
acrylic copolymer dispersion consisting essentially of an aqueous, plasticizer-free, anionic copolymer dispersion of an acrylic ester and styrene; and
water;
wherein the cement comprises 5 to 50 percent of the total weight of the mortar; the inert filler comprises 10 to 60 percent of the total weight of the mortar; the acrylic copolymer solids comprise 11 to 50 percent of the total weight of the mortar; and the water including water for the copolymer dispersion comprises 14 to 40 percent of the total weight of the mortar and the mortar exhibits elastomeric properties measured by way of an elongation of greater than 100 percent when cured.

2. A cement based mortar as in claim 1, wherein the acrylic polymer solids content of said mortar is about 15 to 25 percent of the total weight of the mortar.

3. A cement based mortar as in claim 2, wherein the cement comprises 20 to 30 percent of the total weight of the mortar, the inert filler comprises 25 to 35 percent of the total weight of the mortar; the water including water for the copolymer dispersion comprises 15 to 25 percent of the total weight of the mortar, and the acrylic copolymer solids comprise 15 to 25 percent of the total weight of the mortar.

4. A cement based mortar as in claim 1, wherein said cement is selected from the group consisting of Portland cement, Portland blast-furnace slag cement- Portland-pozzolan cement, and aluminous cement, or the like, or a mixture of any of the foregoing,

5. A cement based mortar as in Claim 4, wherein said cement comprises Portland cement.

6. A cement based mortar as in Claim 1, wherein said inert filler is selected from the group consisting of silica sand, crushed limestone, perlite, volcanic aggregate, limestone, alumina trihydrate, ground quartz, volcanic ash, fine sands, talc, mica, clays, or the like, or a mixture of any of the foregoing.

7. A cement based mortar as in Claim 6, wherein said inert filler comprises silica sand.

8. A cement based mortar as in Claim 1, wherein said acrylic copolymer comprises "ACRONAL®".

9. A cement based mortar as in Claim 8, wherein said acrylic copolymer comprises "ACRONAL S-400 ®".

10. A cement based mortar having elastomeric properties, consisting essentially of:
cement;
silica sand;
hydroxymethyl methylcellulose;
calcium formate;
calcium carbonate;
acrylic copolymer dispersion consisting essentially of an aqueous, plasticizer-free, anionic copolymer dispersion of an acrylic ester and styrene;
defoamer;
preservative; and water
and wherein water including water of the copolymer dispersion comprises 14 - 40 percent of the total weight of the mortar, the cement comprises 5 to 50 percent of the total weight of the mortar and the acrylic copolymer solids comprise 11 to 50 percent of the total weight of the mortar and the mortar exhibits an elongation of greater than 100 percent when cured.

11. A cement based mortar having elastomeric properties, comprising a powder component and an admix liquid component, wherein said powder component consists essentially of:
cement; and
filler;
and wherein said admix liquid component consists essentially of:
acrylic copolymer dispersion consisting essentially of an aqueous, plasticizer-free, anionic copolymer dispersion of an acrylic ester and styrene; and water
and wherein water including water of the copolymer dispersion comprises 14 - 40 percent of the total weight of the mortar, the cement comprises 5 to 50 percent of the total weight of the mortar and the acrylic copolymer solids comprise 11 to 50 percent of the total weight of the mortar and the mortar exhibits an elongation of greater than 100 percent when cured.

12. A cement based mortar as in Claim 11, wherein said cement is selected from the group consisting of Portland cement, Portland blast-furnace slag cement, Portland-pozzolan cement, and aluminous cement, or the like; or a mixture of any of the foregoing.

13. A cement based mortar as in Claim 12, wherein said cement comprises Portland cement.

14. A cement based mortar as in Claim 13, wherein said inert filler is selected from the group consisting of silica sand, crushed limestone, perlite, volcanic aggregate, limestone, alumina trihydrate, ground quartz, volcanic ash, fine sands, talc, mica, clays, or the like, or a mixture of any of the foregoing.

15. A cement based mortar as in Claim 14, wherein said inert filler comprises silica sand.

16. A cement based mortar as in Claim 11, wherein said acrylic copolymer comprises "ACRONAL ®".

17. A cement based mortar composition as in Claim 16, wherein said acrylic copolymer comprises "ACRONAL S-400®"

18. A cement based mortar as in Claim 11, wherein said powder component and said liquid admix component are separately packaged in an airtight condition prior to the admixture thereof.

19. A cement based mortar composition having elastomeric properties, consisting essentially of;
cement;
inert filler;
acrylic copolymer dispersion consisting essentially of an aqueous, plasticizer-free, anionic copolymer dispersion of an acrylic ester and styrene;
and water
and wherein water including water of the copolymer dispersion comprises 14 - 40 percent of the total weight of the mortar, the cement comprises 5 to 50 percent of the total weight of the mortar and the acrylic copolymer solids comprise 11 to 50 percent of the total weight of the mortar and the mortar exhibits an elongation of greater than 100 percent when cured and has greater than 24,15 bar (350 psi) bond strength to quarry tile.

20. A method for preparing a cement based mortar consisting essentially of:
formulating a powder component consisting essentially of cement and inert filler;
blending the ingredients of the powder component;
formulating an admix liquid component consisting essentially of water and an acrylic copolymer dispersion consisting essentially of an aqueous, plasticizer-free, anionic copolymer dispersion of an acrylic ester and styrene;
mixing the ingredients of the liquid component;
admixing the powder component and the liquid admix component in such proportion that the acrylic copolymer solids content of the resulting mortar is 11 to 50 percent of the total weight of the mortar and the cement is 5 to 50 percent of the total weight of the mortar and water including water of the copolymer dispersion is 14 - 40 percent of the total weight of the mortar and wherein the mortar exhibits an elongation of greater than 100 percent.

21. A method for preparing a cement based mortar as in Claim 20, wherein said powder component further consists of hydroxymethyl methylcellulose, calcium formate, and calcium carbonate, and wherein said admix liquid component further consists of defoamer and preservative.

## Patentansprüche

1. Zementbasierender Mörtel mit elastomeren Eigenschaften, im wesentlichen bestehend aus:
Zement;
inerter Füllstoff; Acrylpolymerdispersion, im wesentlichen bestehend aus einer wäßrigen, weichmacherfreien, anionischen Copolymerdispersion eines Acrylesters und Styrol;
und
Wasser;
wobei der Zement 5 - 50% des Gesamtgewichtes des Mörtels bildet, wobei der inerte Füllstoff 10 - 60 Gew.% des Gesamtgewichts des Mörtels bildet; wobei der Acryl-Copolymer-Feststoff 11 - 50 Gew.% des Gesamtgewichts des Mörtels bildet; und wobei das Wasser, einschließlich dem Wasser der Copolymerdispersion, 14 - 40% des Gesamtgewichts des Mörtels bildet und der Mörtel elastomere Eigenschaften im gehärteten Zustand aufweist, welche, als Dehnung gemessen, größer als 100% sind.

2. Zementbasierender Mörtel nach Anspruch 1, worin der Acryl-Copolymer-Feststoffgehalt des Mörtels ca. 15 - 25% des Gesamtgewichts des Mörtels beträgt.

3. Zementbasierender Mörtel nach Anspruch 2, worin der Zement 20 - 30% des Gesamtgewichts des Mörtels bildet, wobei der inerte Füllstoff 25 - 35 Gew.% des Mörtels bildet; wobei das Wasser, einschließlich dem Wasser der Copolymerdispersion, 15 - 25% des Gesamtgewichts des Mörtels bildet, und wobei die Acryl-Copolymer-Feststoffe 15 - 25% des Gesamtgewichts des Mörtels bilden.

4. Zementbasierender Mörtel nach Anspruch 1, worin der Zement ausgewählt ist aus der aus Portlandzement, Portland-Hochofenschlackezement, Portland-Traßzement und Tonerdezement oder dergleichen, oder einer beliebigen Mischung der voranstehenden.

5. Zementbasierender Mörtel nach Anspruch 4, worin der Zement Portlandzement enthält.

6. Zementbasierender Mörtel nach Anspruch 1, worin der inerte Füllstoff ausgewählt ist aus der aus Quarzsand, gebrochenem Kalkstein, Perlit, vulkanischen Aggregaten, Kalkstein, Aluminiumoxidtrihydrat, gemahlenem Quarz, vulkanischer Asche, Feinsanden, Talkum, Mica, Tonerden oder dergleichen bestehenden Gruppe oder einer Mischung aus jedem der voranstehenden.

7. Zementbasierender Mörtel nach Anspruch 6, worin der inerte Füllstoff Quarzsand enthält.

8. Zementbasierender Mörtel nach Anspruch 1, worin das Acryl-Copolymer "ACRONAL®" umfaßt.

9. Zementbasierender Mörtel nach Anspruch 8, worin das Acryl-Copolymer "ACRONAL S-400®" umfaßt.

10. Zementbasierender Mörtel mit elastomeren Eigenschaften, im wesentlichen bestehend aus:
Zement:
Quarzsand;
Hydroxymethyl-Methylcellulose;
Calciumformiat;
Calciumcarbonat; Acryl-Copolymerdispersion, bestehend im wesentlichen aus einer wäßrigen, weichmacherfreien, anionischen Copolymerdispersion eines Acrylesters und Styrol;
Entschäumer;
Konservierungsmittel; und
Wasser
und worin das Wasser, einschließlich dem Wasser der Copolymerdispersion, 14 - 40% des Gesamtgewichts des Mörtels bildet, wobei der Zement 5 - 50% des Gesamtgewichts des Mörtels bildet und der Acryl-Copolymerfeststoff 11 - 50% des Gesamtgewichts des Mörtels bildet, und der Mörtel eine Dehnung von mehr als 100% im gehärteten Zustand aufweist.

11. Zementbasierender Mörtel mit elastomeren Eigenschaften, umfassend eine pulverförmige Komponente und eine beigemischte flüssige Komponente, wobei die pulverförmige Komponente im wesentlichen besteht aus:
Zement; und
Füllstoff;
und worin die beigemischte flüssige Komponente im wesentlichen besteht aus:
Acryl-Copolymerdispersion, im wesentlichen bestehend aus einer wäßrigen, weichmacherfreien, anionischen Copolymerdispersion eines Acrylesters und Styrol; und
Wasser;
und worin Wasser, einschließlich dem Wasser der Copolymerdispersion, 14 - 40% des Gesamtgewichts des Mörtels bildet,
worin der Zement 5 -50% des Gesamtgewichts des Mörtels bildet und worin die Acryl-Copolymer-Feststoffe 11 - 50 Gew.% des Gesamtgewichts des Mörtels bilden, und worin der Mörtel eine Dehnung von mehr als 100% in ausgehärtetem Zustand aufweist.

12. Zementbasierender Mörtel nach Anspruch 11, worin der Zement ausgewählt ist aus der Gruppe, bestehend aus Portlandzement, Portland-Hochofenschlackezement, Portland-Traßzement und Tonerdezement oder dergleichen, oder einer beliebigen Mischung der voranstehenden.

13. Zementbasierender Mörtel nach Anspruch 12, worin der Zement Portlandzement umfaßt.

14. Zementbasierender Mörtel nach Anspruch 13, worin der inerte Füllstoff ausgewählt ist aus der Gruppe, bestehend aus Siliciumsand, gebrochenem Kalkstein, Perlit, vulkanischen Aggregaten, Kalkstein, Aluminiumoxidtrihydrat, gemahlenem Quarz, vulkanischer Asche, feinen Sanden, Talkum, Mica, Tonerden oder dergleichen, oder eine beliebige Mischung der voranstehenden.

15. Zementbasierender Mörtel nach Anspruch 14, worin der inerte Füllstoff Quarzsand umfaßt.

16. Zementbasierender Mörtel nach Anspruch 11, worin das Acryl-Copolymer "ACRONAL®" umfaßt.

17. Zementbasierende Mörtelzusammensetzung nach Anspruch 16, worin das Acryl-Copolymer "ACRONAL S-400®" umfaßt.

18. Zementbasierender Mörtel nach Anspruch 11, worin die pulverförmige Komponente und die flüssige beigemischte Komponente in luftdichtem Zustand vor der Mischung derselben getrennt verpackt sind.

19. Zementbasierende Mörtelzusammensetzung mit elastomeren Eigenschaften, im wesentlichen bestehend aus
Zement;
inertem Füllstoff; Acryl-Copolymerdispersion, bestehend im wesentlichen aus einer wäßrigen, weichmacherfreien, anionischen Copolymerdispersion eines Acrylesters und Styrol; und Wasser;
und worin Wasser, einschließlich des Wassers der Copolymerdispersion, 14 - 40% des Gesamtgewichts des Mörtels bildet, worin der Zement 5 - 50% des Gesamtgewichts des Mörtels bildet und worin die Acryl-Copolymer-Feststoffe 11 - 50% des Gesamtgewichts des Mörtels bilden, und worin der Mörtel eine Dehnung von mehr als 100% im gehärteten Zustand aufweist und eine Bindungsfestigkeit von mehr als 24,15 bar (350 psi) gegenüber Steinziegeln aufweist.

20. Verfahren zur Herstellung eines zementbasierenden Mörtels, im wesentlichen bestehend aus:
Formulieren einer pulverförmigen Komponente, im wesentlichen bestehend aus Zement und einem inerten Füllstoff;
Mischen der Bestandteile der pulverförmigen Komponente;
Formulieren einer beizumischenden flüssigen Komponente, im wesentlichen bestehend aus Wasser und einer Acryl-Copolymerdispersion, welche im wesentlichen aus einer wäßrigen, weichmacherfreien, anionischen Copolymerdispersion eines Acrylesters und Styrol besteht;
Mischen der Inhaltsstoffe der flüssigen Komponente;
Vermischen der pulverförmigen Komponente und der flüssigen beizumischenden Komponente in einem solchen Verhältnis, daß der Acryl-Copolymerfeststoffgehalt des resultierenden Mörtels 11 - 50% des Gesamtgewichts des Mörtels ausmacht, und daß der Zement 5 -50% des Gesamtgewichts des Mörtels bildet und daß Wasser, einschließlich des Wassers der Copolymerdispersion, 14 - 40% des Gesamtgewichts des Mörtels ausmacht, und worin der Mörtel eine Dehnung von mehr als 100% aufweist.

21. Verfahren zur Herstellung eines zementbasierenden Mörtels gemäß Anspruch 20, worin die pulverförmige Komponente ferner aus Hydroxymethyl-Methylcellulose, Calciumformiat und Calciumcarbonat besteht, und worin die beizumischende flüssige Komponente ferner aus einem Entschäumer und Konservierungsstoffen besteht.

## Revendications

1. Mortier à base de ciment ayant des propriétés élastomères, composé essentiellement:
- de ciment;
- d'une charge inerte;
- d'une dispersion copolymère acrylique composée essentiellement d'une dispersion aqueuse de copolymère anionique d'un ester acrylique et du styrène, exempte de plastifiant; et
- d'eau;
dans lequel le ciment constitue 5 à 50 pourcent du poids total du mortier; la charge inerte constitue de 10 à 60 pourcent du poids total du mortier; les solides copolymères acryliques constituent 11 à 50 pourcent du poids total du mortier; et l'eau , y compris l'eau pour la dispersion copolymère, constitue 14 à 40 pourcent du poids total du mortier et le mortier présente des propriétés élastomères mesurées au vu d'un allongement supérieur à 100 pourcent quand il est durci.

2. Mortier à base de ciment selon la revendication 1, dans lequel la teneur en solides polymères acryliques dudit mortier est d'environ 15 à 25 pourcent du poids total du mortier.

3. Mortier à base de ciment selon la revendication 2, dans lequel le ciment constitue 20 à 30 pourcent du poids total du mortier, la charge inerte constitue 25 à 35 pourcent du poids total du mortier, l'eau , y compris l'eau pour la dispersion copolymère, constitue 15 à 25 pourcent du poids total du mortier, et les solides copolymères acryliques constituent 15 à 25 pourcent du poids total du mortier.

4. Mortier à base de ciment selon la revendication 1, dans lequel ledit ciment est choisi dans le groupe formé par le ciment Portland, le ciment de laitier de haut-fourneau Portland, le ciment Portland à la pouzzolane et le ciment alumineux, ou analogues, ou un mélange des précédents.

5. Mortier à base de ciment selon la revendication 4, dans lequel ledit ciment comprend le ciment Portland.

6. Mortier à base de ciment selon la revendication 1, dans lequel ladite charge inerte est choisie dans le groupe formé par le sable de silice, le calcaire broyé, la perlite, l'agrégat volcanique, le calcaire, l'alumine trihydratée, le quartz broyé, la cendre volcanique, les sables fins, le talc, le mica, les argiles, ou analogues, ou un mélange des précédents.

7. Mortier à base de ciment selon la revendication 6, dans lequel ladite charge inerte comprend le sable de silice.

8. Mortier à base de ciment selon la revendication 1, dans lequel ledit copolymère acrylique comprend "ACRONAL®".

9. Mortier à base de ciment selon le revendication 8, dans lequel ledit copolymère acrylique comprend "ACRONAL S-400®".

10. Mortier à base de ciment ayant des propriétés élastomères, composé essentiellement:
- de ciment;
- de sable de silice;
- d'hydroxyméthylméthylcellulose;
- de formiate de calcium;
- de carbonate de calcium;
- d'une dispersion copolymère acrylique composée essentiellement d'une dispersion aqueuse de copolymère anionique d'un ester acrylique et du styrène, exempte de plastifiant;
- de anti-mousse;
- de conservateur; et
- d'eau;
et dans lequel l'eau , y compris l'eau pour la dispersion copolymère constitue 14 à 40 pourcent du poids total du mortier,
le ciment constitue 5 à 50 pourcent du poids total du mortier et les solides copolymères acryliques constituent 11 à 50 pourcent du poids total du mortier et le mortier présente un allongement supérieur à 100 pourcent quand il est durci.

11. Mortier à base de ciment ayant des propriétés élastomères, comprenant un composant en poudre et un adjuvant liquide, dans lequel ledit composant de poudre se compose essentiellement:
- de ciment; et
- d'une charge;
et dans lequel ledit adjuvant liquide se compose essentiellement:
- d'une dispersion copolymère acrylique composée essentiellement d'une dispersion aqueuse de copolymère anionique d'un ester acrylique et du styrène, exempte de plastifiant; et d'eau
et dans lequel l'eau , y compris l'eau pour la dispersion copolymère constitue 14 à 40 pourcent du poids total du mortier, le ciment constitue 5 à 50 pourcent du poids total du mortier et les solides copolymères acryliques constituent 11 à 50 pourcent du poids total du mortier et le mortier présente un allongement supérieur à 100 pourcent quand il est durci.

12. Mortier à base de ciment selon la revendication 11, dans lequel ledit ciment est choisi dans le groupe formé par le ciment Portland, le ciment de laitier de haut-fourneau Portland, le ciment Portland à la pouzzolane et le ciment alumineux, ou analogues; ou un mélange des précédents.

13. Mortier à base de ciment selon la revendication 12, dans lequel ledit ciment comprend le ciment Portland.

14. Mortier à base de ciment selon la revendication 13, dans lequel ladite charge inerte est choisie dans le groupe formé par le sable de silice, le calcaire broyé, la perlite, l'agrégat volcanique, le calcaire, l'alumine trihydratée, le quartz broyé, la cendre volcanique, les sables fins, le talc, le mica, les argiles, ou analogues, ou un mélange des précédents.

15. Mortier à base de ciment selon la revendication 14, dans lequel ladite charge inerte comprend le sable de silice.

16. Mortier à base de ciment selon la revendication 11, dans lequel ledit copolymère acrylique comprend "ACRONAL®".

17. Composition de mortier à base de ciment selon la revendication 16, dans laquelle ledit copolymère acrylique comprend "ACRONAL S-400®".

18. Mortier à base de ciment selon la revendication 11, dans lequel ledit composant de poudre et ledit adjuvant liquide sont emballés séparément et hermétiquement à l'abri de l'air avant leur mélange.

19. Composition de mortier à base de ciment ayant des propriétés élastomères, composée essentiellement:
- de ciment;
- d'une charge inerte;
- d'une dispersion copolymère acrylique composée essentiellement d'une dispersion aqueuse de copolymère anionique d'un ester acrylique et du styrène, exempte de plastifiant; et
- d'eau;
et dans lequel l'eau , y compris l'eau pour la dispersion copolymère constitue 14 à 40 pourcent du poids total du mortier, le ciment constitue 5 à 50 pourcent du poids total du mortier et les solides copolymères acryliques constituent 11 à 50 pourcent du poids total du mortier et le mortier présente un allongement supérieur à 100 pourcent quand il est durci et présente un lien de cohésion, pour l'arrachage de carreaux, plus grand que 24,15 bar (350 psi).

20. Procédé pour préparer un mortier à base de ciment consistant essentiellement:
- à formuler un composant de poudre composé essentiellement de ciment et de charge inerte;
- à mélanger les ingrédients du composant de poudre;
- à formuler un adjuvant liquide composé essentiellement d'eau et d'une dispersion copolymère acrylique composée essentiellement d'une dispersion aqueuse de copolymère anionique d'un ester acrylique et du styrène, exempte de plastifiant;
- à mélanger les ingrédients du composant liquide;
- à mélanger le composant de poudre et l'adjuvant liquide en une proportion telle que la teneur en solides copolymères acryliques du mortier résultant représente 11 à 50 pourcent du poids total du mortier et le ciment représente 5 à 50 pourcent du poids total du mortier et l'eau , y compris l'eau de la dispersion copolymère constitue 14 à 40 pourcent du poids total du mortier et dans lequel le mortier présente un allongement supérieur à 100 pourcent.

21. Procédé pour préparer un mortier à base de ciment selon la revendication 20, dans lequel ledit composant de poudre se compose en plus d'hydroxyméthylméthylcellulose, de formiate de calcium, et de carbonate de calcium, et dans lequel ledit adjuvant liquide comprend de plus un anti-mousse et un conservateur.
